# EUROPÄISCHE PATENTANMELDUNG

(11) **EP 0 926 200 A1**
(43) Veröffentlichungstag der Anmeldung: **30.06.1999**
(21) Anmeldenummer: 98124619.2
(22) Anmeldetag: 23.12.1998
(51) Int. Cl.: C08L 77/00, C08L 73/00

(54) **Polyamid-Polyketon-Blends**

(30) Priorität: 23.12.1997 DE 19757607
(71) Anmelder: EMS-INVENTA AG, 8002 Zürich (CH)
(72) Erfinder: Stöppelmann, Georg Dr.rer. nat., 7402 Bonaduz (CH); Hewel, Manfred Dr.rer. nat., 7415 Rodels (CH)
(74) Vertreter: Kirschner, Klaus Dieter, Dipl.-Phys.

(57) **Zusammenfassung**

Die Erfindung betrifft eine Polymer-Blend-Zusammensetzung enthaltend (A) ein lineares alternierendes Polyketonpolymer auf der Basis von Kohlenmonoxid und wenigstens einer ethylenisch ungesättigten Kohlenwasserstoffverbindung, (B) wenigstens ein Polyamid und/oder Block-Copolyesteramid, (C) gegebenenfalls übliche Hilfs- und Zusatzstoffe wie Stabilisatoren, Pigmente, Füllstoffe, Weichmacher und Schlagzähmodifikatoren, wobei das Polyamid und/oder das Block-Copolyesterpolyamid (B) ein Verhältnis von Carboxyl- zu Amino-Endgruppen von größer als 1 aufweist.

## Beschreibung

Die vorliegende Erfindung betrifft Polymerblend-Zusammensetzungen enthaltend Polyamide (abgekürzt auch PA genannt) und/oder Block-Copolyesteramide, aliphatische Polyketone (abgekürzt auch PK genannt) und gegebenenfalls übliche Hilfs- und Zusatzstoffe. Die Erfindung betrifft ebenfalls die Herstellung dieser Polyamid/Polyketon (PA/PK)-Blendzusammensetzungen.

Aus der organischen Chemie niedermolekularer Verbindungen ist bekannt, dass Moleküle die Keton-Gruppen enthalten, miteinander reagieren können. Diese Reaktion, die sowohl base- als auch säurekatalysiert ablaufen kann, wird als Aldolkondensation bezeichnet. Da Polyamide sowohl saure COOH- als auch basische Amino-Endgruppen enthalten, besteht die Möglichkeit, dass Polyketone durch Zugabe von Polyamiden vernetzt werden. In Knetversuchen, bei denen Mischungen aus Polyketon und amino- oder carboxylterminierten PA 12 untersucht wurden, hat sich gezeigt, dass die Vernetzung von Polyketonen hauptsächlich durch die Amino-Endgruppen des Polyamids hervorgerufen wird.

In der **EP-A-057 374** werden Blends aus linearen alternierenden Polymeren aus CO und Olefinen und schlagzähmodifizierten PA6/ABS- Blends beschrieben. Bei diesen Systemen handelt es sich um morphologisch komplexe Systeme, die zwingend kautschukartige Anteile enthalten. Dieser Kautschuk-Anteil kann zur Reduktion der Wärmeformbeständigkeit führen. Ausserdem verringert sich die Streckspannung, wie in den Beispielen beschrieben.

In der **Statutory Invention Registration H1601** werden PK/PC-Blends beschrieben, in denen Proofpolymere aus PC und PA6 als Compatibilisatoren wirken. Bei 5% Zugabe dieses Propfpolymeren ist allerdings noch keine Erhönung der Schlagzähigkeit festzustellen.

In der **US-A-5,175,210** werden ternäre Polymer-Blends aus PK, PA und Maleinsäure-Anhydrid-gepfropften Blockcopolymeren beschrieben. PA werden nach dieser Lehre aber bis 20% als Compatibilisatoren verwendet. Soilen grössere PA-Anteile für die PA, PK-Blends erzielt werden, sind SEBS-Blocl<copolymere als Compatibilisatoren notwendig.

In der **US-A-4,839,437** sind PK/PA-Blends beschrieben, bei denen das Polyamid eine Molmasse von mindestens 5000 g/mol hat. Die in den PK/PA-Blends enthaltenen Polyamide weisen eine zu hohe Aminoendgruppen-Konzentration auf, was zu Vernetzungsreaktionen führt (vgl. Sp. 5, Z. 24 - 26).

Die **US-A-4,874,825** beschreibt PK/Polyetheresteramid-Blends, wobei ebenfalls die Molmasse des Polyetheresteramids begrenzt ist (15'000 g/mol).

Ketonharze sind aus der alkalisch katalysierten Selbstkondenstion von Ketonen (Cyclohexanon, Methylcyclohexanon) oder Mischkondensation von Ketonen (Aceton, Butanon, Acetophenon, Cyclohexanon, Methylcyclohexanon) mit Formaldehyd resultierende, unverseifbare und neutral reagierende Harze (Kunstharze) von heller Farbe und Erweichungsbereichen von ca. 80-130°. Mischkondensate von Ketonen (z.B. Cyclohexanon) mit längerkettigen Aldehyden haben keine technische Bedeutung. In Abhängigkeit vom Ausgangsketon unterteilt man die Ketone in Aceton-, Acetonphenon-Harze usw. Auch Ketone aus Mischungen unterschiedlicher Ketone sind bekannt.

Polyketon-Polymere sind im Stand der Technik bekannt. Beispielsweise beschreibt US-A-4,880,903 lineare alternierende Polyketonterpolymere auf Basis von Kohlenmonoxidethylen und anderen olefinisch untergesättigten Kohlenwasserstoffen, wie Propylen.

US-A-4,843,144 beschreibt ein Verfahren zur Herstellung von linearen alternierenden Polyketon-Polymeren aus Kohlenmonoxid und wenigstens einem ethylenisch ungesättigten Kohlenwasserstoff unter Verwendung von Palladiumkatalysatoren.

Andere aliphatische Polyketone auf Basis auf Ethylen, Kohlenmonoxid und Propylen werden z.B. in EP-A-457 374 und EP-A-569 101 beschrieben und werden unter verschiedenen Handelsnamen auf dem Markt angeboten.

Aus den oben erwähnten Dokumenten ist ersichtlich, dass es bisher nicht möglich war, reine PK/PA-Blends über den gesamten Zusammensetzungsbereich ohne Einschränkung der PA-Molmasse herzustellen. Ausserdem war die Compoundierung dieser Blends schwierig, da die Gefahr von Vernetzungen oder Abbau bestand.

Die Aufgabenstellung bestand also darin, PA/PK-Blends zur Verfügung zu stellen, deren Zusammensetzung den gesamten Konzentrationsbereich abdeckt, die an die unterschiedlichen Verarbeitungsverfahren angepasste Viskositäten besitzen ohne dass bei der Herstellung Vernetzungs- oder Abbaureaktionen eintreten.

Diese Aufgabe wird erfindungsgemäß durch die Polymerblend-Zusammensetzung gemäß Anspruch 1 sowie durch das Verfahren nach Anspruch 11 bzw. 12 sowie durch die Verwendungen nach Anspruch 13 gelöst.

In den Unteransprüchen sind vorteilhafte Ausführungsformen der Erfindung enthalten.

Erfindungsgemäß wurde nun festgestellt, daß man stabile PA/PK-Blends nur dann herstellen kann, wenn in den PK/PA-Blends solche PA oder CoPA zur Anwendung kommen, die einen deutlichen COOH-Gruppen-Überschuss aufweisen, d.h. ein Carboxyl- zu -Amino-Endgruppenverhältnis von größer 1 haben. Besonders bevorzugt sind solche PA, deren NH₂-Endgruppen-Konzentration gleich oder kleiner als 15 µÄq/g ist. Die Carboxylendgruppen weisen vorzugsweise Werte von wenigstens 80 µÄq/g auf. Dies lässt sich dadurch erreichen, dass während der Polykondensation der Polyamide, d.h. von Komponente (B), Säuren hinzugegeben werden. Eine weitere Bedingung ist, dass der Schmelzpunkt von Komponente (B), d.h. des PA 265°C nicht übersteigen sollte. Bevorzugt sind Schmelzpunkte von 150 bis 250°C, besonders bevorzugt 175 bis 240°C. Es können die üblichen aliphatischen PA und CoPA eingesetzt werden sowie auch solche, die cycloaliphatische und/oder aromatische Monomere besitzen. Weiterhin kann das PA die üblichen Additive wie Stabilisatoren, Pigmente, Füllstoffe, Weichmacher, Schlagzähmodifikatoren oder auch spannungsableitende Additive wie Ruß oder andere Kohlenstoff-Modifiationen enthalten.

Das in der erfindungsgemäßen Zusammensetzung enthaltene Polyketon (Komponente (A)) ist gekennzeichnet durch die folgende allgemeine Formel I: 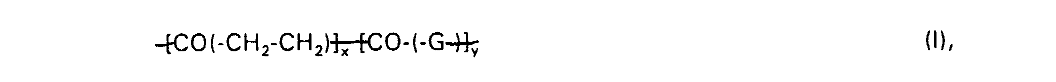 worin G abgeleitet ist von einem α-Olefin-Monomer mit wenigstens 3 Kohlenstoffatomen, die durch wenigstens eine oder mehrere ethylenisch ungesättigte Bindung(en) miteinander verbunden sind, x und y ganze Zahlen sind, und das Verhältnis von y zu x nicht mehr als 0,5 ist.

Insbesondere ist das Polymer G in der Formel I Propylen und das Verhältnis x zu y zwischen 0,01 und 0,1.

Das erfindungsgemäße Polyketon (A) ist dadurch gekennzeichnet, dass es ein alternierendes Copolymer aus Ethylen und Kohlenmonoxid ist, wobei ein weiteres Olefin wie beispielsweise Propylen oder Buten einpolymerisiert sein kann.

Von besonderem Interesse sind Polyketonpolymere mit einem Schmelzpunkt von 175°C bis 300°C, insbesondere von 210°C bis 270°C. Die Polymere haben typischerweise eine limitierende Viskositätszahl (LVN), gemessen in m-Kresol bei 60°C, von 0,5 dl/g bis 10 dl/g, vorzugsweise von 0,8 dl/g bis 0,4 dl/g.

Polyketonpolymere sind an sich aus dem Stand der Technik bekannt (vergl. US PSS 4,880,903, US 4,843,144).

In einer bevorzugten erfindungsgemäßen Ausgestaltung können für das eingesetzte Polyamid (B) Ausgangsmonomere aus Lactamen, ω-Aminocarbonsäuren, Dicarbonsäuren und Diaminen, Dicarbonsäuren/Diaminsalzen zugängliche aliphatische und teilkristalline oder teilaromatische amorphe Polyamide eingesetzt werden. Wird z.B. als Ausgangsmonomer Caprolactam eingesetzt, so kann mindestens eine Dicarbonsäure ausgewählt aus Adipinsäure, Sebazinsäure und Terephthalsäure und/oder Isophthalsäure und mindestens ein Diamin ausgewählt aus Hexamethylen und Tetramethylendiamin, oder Dicarbonsäure-Diamin-Salze davon, polymerisiert bzw. polykondensiert werden. Als Dicarbonsäure besonders bevorzugt sind Adipinsäure und Terephthalsäure. Bei entsprechender Auswahl der Ausgangsmonomeren für die Polymerisation bzw. Polykondensation gelangt man beispielsweise zu den Polyamiden PA6, PA66, PA610, PA612, PA8, PA88, PA9, PA11, PA12, PA1212, PA1112, PA1012 und ähnlichen. Die Kennzeichnung der Polyamide entspricht internationaler Norm, wobei die erste(n) Ziffer(n) die C-Atomzahl des Ausgangsdiamins und die letzte(n) Ziffer(n) die C-Atom der Dicarbonsäure angeben. Wird nur eine Zahl genannt, so bedeutet dies, daß von einer α, ω-Aminocarbonsäure bzw. von dem davon abgeleiteten Lactam ausgegangen worden ist (vergl. H. Domininghaus, die Kunststoffe und ihre Eigenschaften, S. 272, VDI Verlag, 1976).

Sofern Copolyamide (Komponente (B)) verwendet werden, können diese, wie oben bereits ausgeführt ist z.B. Adipinsäure, Sebazinsäure, Korksäure, Isophthalsäure, Terephthalsäure als Cosäure bzw. -(4'-Aminocyclohexyl)-methan, Trimethylhexamethylendiamin, Hexamethyldiamin, oder ähnliche als Codiamin enthalten.

Die Herstellung dieser Polyamide ist bekannt vergl. z.B. D.B. Jakobs, J. Zimmermann, Polymerisation Processes, S. 424 bis 467, Interscience Publishers, New York 1977; DEAS 2152194.

Ebenfalls geeignet als Polyamide sind gemischte aliphatische/aromatische Polykondensate, wie sie z.B. in den USPSsen 2071250, 2071251, 2130523 etc. beschrieben werden. Als Polyamide geeignete Polykondensate sind ebenfalls Poly-(etheresteramide) bzw. Poly(etheramide). Derartige Produkte werden z.B. in DEOS 2712987, 2523991, 3006961 beschrieben.

Das Molekulargewicht (Zahlenmittel) der Polyamide liegt oberhalb von 5000 vorzugsweise oberhalb von 10000 - ensprechend einer relativen Viskosität (η_{rel.}) im Bereich von 1,50 bis 2,4.

Die Polyamide der Komponente (B) können bis zu 40 Gew.- % in Thermoplast enthalten sein, sofern diese die erfindungsgemäßen Eigenschaften nicht stören. Insbesondere seien hier Polycarbonat, Acrylnitril/Styrolacrylat-, Acrylnitril/Styrol-Copolymerisate oder Polyphenylenäther genannt.

Sofern es erforderlich ist, können die Polyamide schlagzäh eingestellt werden. Geeignete Modifier sind z.B. Ethylen/Propylen- oder Ethylen/Propylen-Dien-Copolymere. Weiterhin können auch schlagzäh gemachte Kautschukke eingesetzt werden. Der Anteil an schlagzäh machenden Komponenten ist jedoch so zu wählen, daß die gewünschten Eigenschaften nicht verschlechtert werden.

In einer weiteren Ausführungsform kann 0,02 bis 0,25 Gew.-% 4-Amino-2,2,6,6-tetraalkylpiperidin den Polyamid-Ausgangsmonomeren zugesetzt werden.

Die Triacetondiaminverbindung wird durch Reaktion ihrer primären Aminogruppen mit den Ausgangsmonomeren bzw. mit den Carboxylgruppen des entstehenden Polyamids an das Kettenende der Polymerkette gebunden. Die sekundäre Aminogruppe der Triacetondiaminverbindung reagiert dabei wegen stearischer Hinderung nicht. Somit wirkt die Triacetondiaminverbindung auch als Kettenregler. Die Hauptwirkung dieser Triacetondiaminverbindung besteht allerdings darin, daß sie das Polyamid inhärent licht- und hitzestabilisiert. Das hergestellte Polyamid bietet somit den Vorteil, daß ein ansonsten für das Einmischen eines Stabilisators in das Polyamid benötigter gesonderter Verfahrensschritt nicht mehr erforderlich ist.

In einer bevorzugten Ausführungsform der Erfindung wird die Triacetondiaminverbindung mit mindestens einem der üblichen Kettenregler kombiniert. Kettenregler sind z.B. Monocarbonsäuren wie Essigsäure, Propionsäure und Benzoesäure. Hierbei werden die Kettenreglerkombination und die angewandten Mengen unter anderem nach dem gewünschten Aminoendgruppengehalt des Endprodukts und nach der gewünschten Schmelzestabilität ausgewählt. Der Aminoendgruppengehalt richtet sich z.B. auch nach der gewünschten Anfärbbarkeit der Faser bzw. Fäden.

Die erfindungsgemäß eingesetzte Komponente (B) d.h. die aliphatischen, teilkristallinen oder teilaromatischen amorphen Polyamide (B) können in einer besonderen Ausführungsform der Erfindung im wesentlichen aus Polyamid-bildenden Monomeren (I),
- 0,02 bis 0,25 Gew.-% 4-Amino-2,2,6,6-tetraalkylpiperidin (II),
- 0 bis 0,2 Gew.-% eines aliphatischen oder zykloaliphatischen Diamins (III), welches eine primäre und tertiäre Aminogruppe trägt, und
- 0 bis 0,7 Gew.-% eines in 4-Stellung zu einer OH-Gruppe funktionalisierten 2,6-Dialkylphenols (IV) der Formel 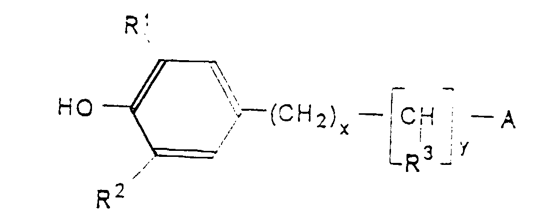
worin R¹ und R² gleiche oder verschiedene Alkylreste mit 1 bis 6 C-Atomen sind, R³ entweder ein Wasserstoffatom oder eine Methylgruppe ist, die funl<tionelle Gruppe A entweder eine freie Carboxylgruppe oder eine C₁-C₄-Alkoholen veresterte Carboxylgruppe oder eine primäre Aminogruppe darstellt, für x und y im Fall der Aminogruppe die Wertekombination (x = 2/- y = 1); (x = 2/y = 0); (x =1/y = 0) und (x = 0/y =1) möglich sind und im Fall der freien oder veresterten Carboxylgruppe x und y zusätzlich jeweils 0 sein können,
aufgebaut sein, wobei sich die Menge der Komponenten I bis IV zu 100 Gew.-% ergänzen, die Summe der Komponenten II, III und IV 0,02 bis 1,2 Gew.-% beträgt und die Komponenten II, III und IV über Amidbindungen an die Polymerketten gebunden sind.

In einer anderen besonderen Ausführungsform der Erfindung können die aus Lactamen, ω-Aminocarbonsäuren zugänglichen Polyamide im wesentlichen aus Polyamid bildenden Monomeren (I),
■ 0,02-0,25 Gew.-% 4-Amino-2,2,6,6-tetraalkylpiperidin (II),
■ 0-0,02 Gew.-% eines aliphatischen oder cyloaliphatischen Diamins (III), welches eine primäre und eine tertiäre Aminogruppe trägt, gegebenenfalls
■ 0,02-0,7 Gew.-% eines in 4-Stellung zur OH-Gruppe funktionalisierten 2,6-Dialkylphenols (IV) der Formel 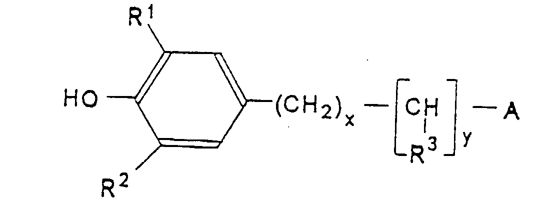 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x = 2 / y=0); (x=1 / y=0) und (x =0 / y=1) möglich sind und im Fall der freien oder veresterten Carboxylgruppe x und y zusätzlich jeweils 0 sein können,
und
0,1 bis 1,2 Gew.-% einer Tri-, Tetra- oder Polycarbonsäure (V) aufgebaut sein,
wobei sich die Mengen der Komponenten I bis V zu 100 Gew.-% ergänzen, die Summe der Komponenten II, III, IV und V 0,2 bis 2,5 Gew.-% beträgt und die Komponenten II, III, IV und V über Amidbindungen an die Polymerketten gebunden sind.

Die als Block-Copolyesterpolyamid einsetzbare Komponente (B) kann auch ein teilkristallines Block-Copolyester-Polyamid aus unterschiedlich strukturierten Segmenten sein, wobei das Block-Copolyesteramid biologisch abbaubar sein kann und als Segmente
- mindestens ein Polyester- oder Copolyesterblock mit einer einheitlichen zahlenmittleren Molmasse zwischen 340 und 10 000 g/mol und
- mindestens ein Polyamid- oder Copolyesterblock mit einer einheitlichen zahlenmittleren Molmasse zwischen 400 und 3000 g/mol und
- wahlweise ein Copolyesteramidblock mit einer einheitlichen zahlenmittleren Molmasse zwischen 500 und 5000 g/mol vorhanden sind.

Die Polyester-, die Copolyester-, die Polyamid-, und die Copolyamid- und Copolyesterpolyamidblöcke können aus aliphatischen Monomereinheiten aufgebaut sein, wobei bis zu 50 Mol-% der gesamten Monomeren durch aromatische Einheiten ersetzt sein können.

Die Polyesterblöcke und die Copolyesterblöcke können auch aus Lactonen oder Hydroxycarbonsäuren aufgebaut sind und eine zahlenmittlere Molmasse von 340 bis 6.000 g/Mol, bevorzugt 340 bis 3.000 g/Mol, besonders bevorzugt von 340 bis 1.500 g/Mol, aufweisen.

Die Polyesterblöcke und die Copolyesterblöcke, die aus Lactonen oder Hydroxycarbonsäuren aufgebaut sind und durch geringe Anteile an höherfunktionellen aliphatischen Alkoholen, weisen eine Funktionalität von 2 oder mehr als 2, insbesondere von 2 bis 4 auf.

Die Lactone sind bevorzugt Caprolacton und Butyrolacton, und die Hydroxycarbonsäuren sind bevorzugt α-, β-, γ- und ω-Hydroxycarbonsäuren, deren Cooligomere sowie deren cyclische Ester, ausgewählt aus der Gruppe der Dilactide und Diglycolide.

Die Polyester oder Copolyesterblöcke sind aus bifunktionellen Alkoholen, insbesondere aus solchen mit 2 bis 10 C-Atomen und aus Dicarbonsäuren, besonders aus solchen mit 2 bis 44 C-Atomen, insbesondere aus solchen Dicarbonsäuren mit 2 bis 18 C-Atomen und mit 36 C-Atomen und mit 44 C-Atomen, aufgebaut.

Die Polyamid- oder Copolyamidblöcke sind aufgebaut aus Monomeren, ausgewählt aus der Gruppe Lactam mit 6 bis 12 C-Atomen, ω-Aminosäuren mit 6 bis 12 C-Atomen, aliphatische Diamine mit 2 bis 10 C-Atomen und Dicarbonsäuren mit 2 bis 44 C-Atomen, insbesondere Dicarbonsäuren mit 2 bis 18 C-Atomen und Dicarbonsäuren mit 36 C-Atomen und mit 44 C-Atomen.

Insbesondere sind die Copolyesteramidblöcke ausgewählt aus der Gruppe der Monomere der Polyester-, Copolyester-, Polyamid-, Copolyamidblöcke und aus linearen aliphatischen Aminoalkoholen mit 2 bis 8 C-Atomen.

Die aromatischen Einheiten sind insbesondere Isophthalsäure-, Terephthalsäure- und Naphthalindicarbonsäure-Einheiten.

Die Blöcke aus der Gruppe Polyester, Copolyester und Copolyesteramide weisen mindestens 95 % OH-Endgruppen auf.

Die Blöcke aus der Gruppe Polyamide und Copolyamide weisen mindestens 95 % Carboxyl-Endgruppen auf.

Die Polyester- oder Copolyester-Blöcke sind linear und weisen eine zahlenmittlere Molmasse zwischen 340 und 2.000 g/Mol auf.

Die als Blockcopolyester-Polyamid eingesetzten Stoffe sind in der DE 44 44 948.8 ausführlichst beschrieben. Der Offenbarungsgehalt der DE 44 44 948.8 (Ems-lnventa) wird hiermit auch zum Gegenstand der vorliegenden Anmeldung gemacht.

Wird gemäß einer besonderen Ausführungsform der Erfindung der Schmelze der Grundmonomeren aus reiner Aminosäure (und/oder Lactam) eine polyfunktionelle, beispielsweise trifunktionelle Carbonsäure zugegeben, so wächst in definiert drei Richtungen ein Polymermolekül, daß an seinem Kettenende immer die Carboxygruppe trägt. Da Carboxygruppen unter üblichen Kondensationsbedingungen nicht miteinander reagieren, kann keine Vernetzung eintreten.

Wenn Copolyamide beispielsweise aus 6-Lactam sowie ω-Aminoundekan- bzw. ω-Aminododekansäure unter Verwendung der Kettenstrukturregelung sowie unter Zusatz einer trifunktionellen Carbonsäure wie z.B. Nitrilotriessigsäure, Nitrilotripropionsäure oder Trimethylnitrotripropionsäure hergestellt, so kann durch das Mischungsverhältnis der Grundmonomeren deren Schmelzpunkt durch die gezielte Wahl des Reglersystems die gewünschte Konzentration der Endgruppen vorgegeben werden.

Aus den vorstehend aufgeführten Polyamid-bildenden Monomeren (I) kann eine große Zahl von Homopolyamiden, Copolyamiden und Blockcopolyamiden aufgebaut werden. Zu den Honopolyamiden, auf die das erfindungsgemäße Verfahren zur Erzeugung der Polymerblend-Zusammensetzungen angewendet wird, gehören Polyamid-6, -11, -12, -66, -69, -610, -612, 6I und MXDA 6.

Zu den Copolyamiden und Blockcopolyamiden gehören entsprechend folgende Produkte: Copolyamid-6/12, -6/66, -66/12, -6/66/12, -6/69, -6/610, -66/610 sowie weiter ternäre und quarternäre Copolyamide aus diesen Monomeren, Copolyamid 6T/6I mit weniger als 45 Mol-% Hexamethylenterephthalamid, die aus Laurinlactam bzw. ω-Aminolaurinsäure, Isophthalsäure und/oder Terephthalsäure sowie den isomeren Bis-(4-Amino-3-methylcyclohexyl)-methanen oder 2,2-Bis-(4-aminocyclohexyl)-propanen aufgebauten Copolyamiden, das Copolyamid aus Dodecandinsäure und den isomeren Bis-(4-Amino-3-3-methylcyclohexyl)-methanen und die Blockcopolyetheramide, welche aus Caprolactam oder Laurinlactam, Dicarbonsäuren und α,ω-Aminopoly(oxy-1,2-propylen) aufgebaut sind.

Die nachfolgenden Beispiele erläutern die Erfindung, ohne sie zu beschränken (erfindungsgemäße Ausführungsbeispiele im Vergleich zu nicht erfindungsgemäßen Beispielen).

### Eingesetzte Materialien:

- aliphatisches Polyketon auf Basis von Ethylen, Kohlenmonoxid und Propylen, im folgenden Polyketon 1 (PK1) genannt.

| | |
|---|---|
| Schmelzpunkt | 225°C |
| relative Viskosität in 0.5% m-Kresol | 1,68 |
| Melt volume index (MVI) 240°C, 2,16 kg | 55 cm³/10 min |

- Polyamide (PA1, PA2, PA3, PA4) auf Basis von Laurinlactam, die in der nachfolgenden Tabelle 1 charakterisiert sind.

**Tabelle 1**

| | Schmelzpunkt (°C) | relative Viskosität (m-Kresol) | COOH-Endgruppen (µÄq/g) | NH₂-Endgruppen (µÄq/g) | MVI (cm³/10min) |
|---|---|---|---|---|---|
| **PA1** | 178 | 1,66 | 80 | 15 | 40 230°C, 2,16 kg |
| **PA2** | 178 | 1,65 | 10 | 100 | 70 230°C, 2,16 kg |
| **PA3** | 178 | 1,9 | 70 | 20 | 100 275°C, 5 kg |
| **PA4** | 178 | 2,25 | 40 | 30 | 20 275°C, 5 kg |

Die PA/PK-Blends wurden auf einem 30mm Doppelschneckenextruder ZSK 30 der Firma Werner&Pfleiderer bei Temperaturen zwischen 240 und 250°C hergestellt. Dabei wurden jeweils das Polyketon sowie das Polyamid separat in den Einzugsbereich des Extruders dosiert. In den nicht erfindungsgemässen Beispielen musste der Versuch wegen Abbaureaktionen abgebrochen werden. Erfindungsgemässe Ausführungsbeispiele im Vergleich zu nicht erfindungsgemässen Beispielen sind der folgenden Tabelle 2 zu entnehmen.

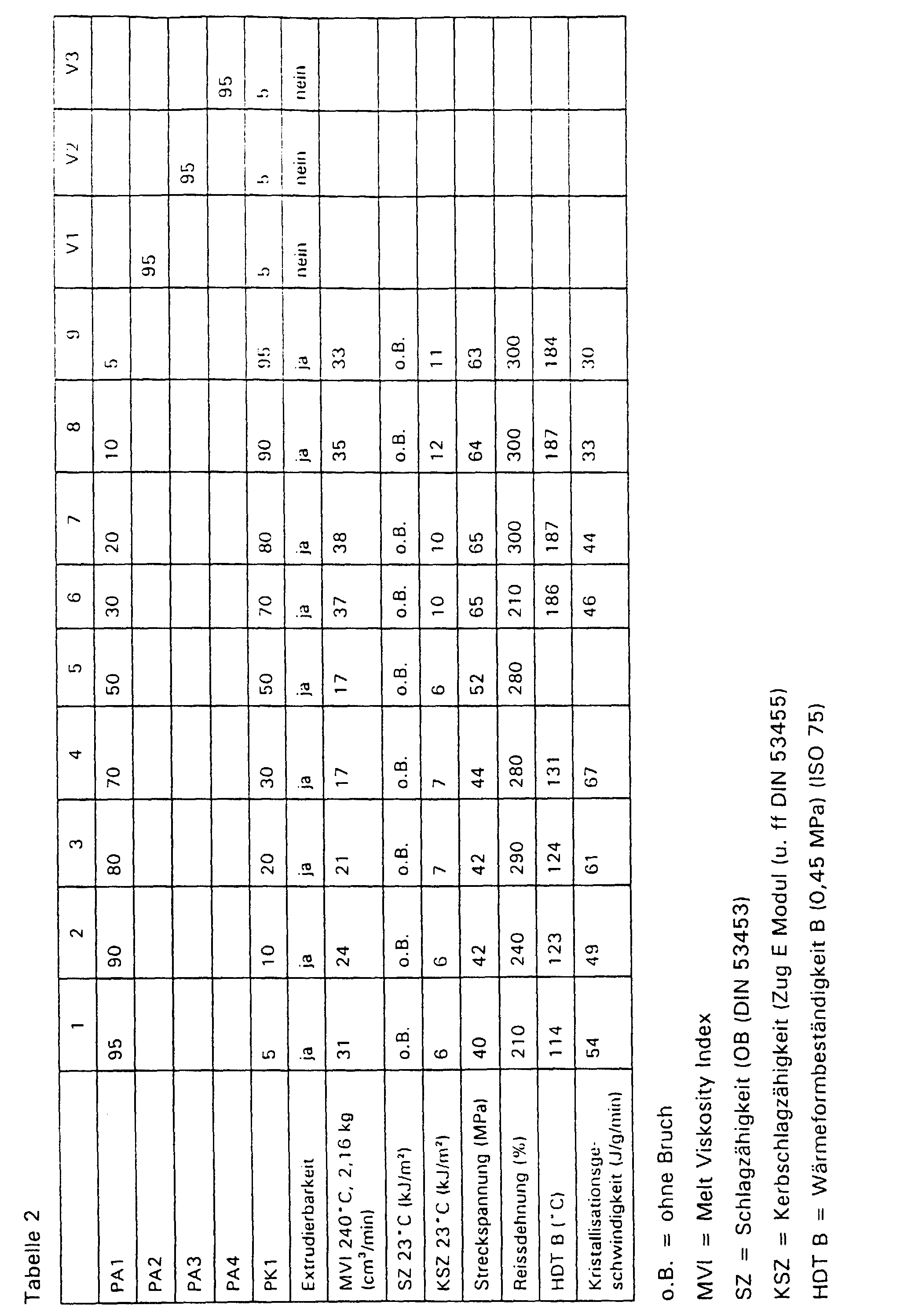

## Patentansprüche

1. Polymer-Blend-Zusammensetzung enthaltend
(A) ein lineares alternierendes Polyketonpolymer auf der Basis von Kohlenmonoxid und wenigstens einer ethylenisch ungesättigten Kohlenwasserstoffverbindung, wobei das lineare alternierende Polyketonpolymer (A) wiederkehrende Einheiten der folgenden allgemeinen Formel I aufweist: 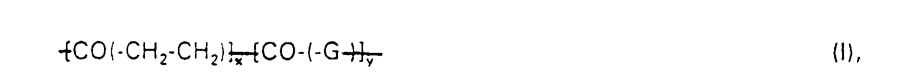 worin G abgeleitet ist von einem α-Olefin-Monomer mit wenigstens 3 Kohlenstoffatomen, die durch wenigstens eine oder mehrere ethylenisch ungesättigte Bindung(en) miteinander verbunden sind, x und y ganze Zahlen sind, und das Verhältnis von y zu x nicht mehr als 0,5 ist,
(B) wenigstens ein Polyamid mit einem zahlenmittleren Molekulargewicht von oberhalb 5000 und/oder wenigstens ein Block-Copolyesteramid, wobei das Polyamid und/oder das Block-Copolyesterpolyamid (B) ein Verhältnis von Carboxyl- zu Amino-Endgruppen von größer als 1 aufweist, das Mischungsverhältnis von Polyamid und/oder Block-Copolyesteramid (B) zu Polyketonpolymer (A), bezogen auf die Polymer-Blend-Zusammensetzung, von 95 zu 5 Gew.-% bis 5 zu 95 Gew.-% beträgt und der Schmelzpunkt des Polyamids und/oder Block-Copolyesteramids (B) den Schmelzpunkt des Polyketonpolymers (A) nicht übersteigt,
C) gegebenenfalls übliche Hilfs- und Zusatzstoffe wie Stabilisatoren, Pigmente, Füllstoffe, Weichmacher und Schlagzähmodifikatoren.

2. Polymer-Blend-Zusammensetzung, **dadurch gekennzeichnet**, daß das Polyamid bzw. das Block-Copolyesterpolyamid Aminoendgruppen von 15 µÄq/g oder kleiner aufweist.

3. Zusammensetzung gemäß einem der Ansprüche 1 oder 2, **dadurch gekennzeichnet,** daß der Schmelzpunkt des Polyamids und/oder des Block-Copolyesterpolyamids 265 °C nicht übersteigt.

4. Zusammensetzung gemäß einem der vorhergehenden Ansprüche 1 bis 3, **dadurch gekennzeichnet**, daß die Schmelzpunkte der Polyamide oder der Block-Copolyesterpolyamide zwischen 150°C und 250°C, insbesondere zwischen 175 °C und 240 °C liegen.

5. Zusammensetzung nach Anspruch 1, **dadurch gekennzeichnet**, daß das Polymer G in der Formel I Propylen ist und das Verhältnis x zu y zwischen 0,01 und 0,1 liegt.

6. Zusammensetzung gemäß einem der vorhergehenden Ansprüche, **dadurch gekennzeichnet**, daß das Polyamid (B) aus insbesondere witterungsstabilen Lactamen mit 6 bis 12 C-Atomen, α,ω-Aminocarbonsäuren mit 6 oder 12 C-Atomen, Dicarbonsäuren mit 2 bis 44 C-Atomen und aliphatischen und cycloaliphatischen Diaminen mit 2 bis 12 C-Atomen, Dicarbonsäure / Diaminsalzen zugänglichen aliphatischen und teilkristallinen oder teilaromatischen amorphen Polyamiden oder Copolyamiden, insbesondere aus Polyamid 12 besteht.

7. Verfahren zur Herstellung der Polymer-Blend-Zusammensetzung gemäß irgendeinem der vorhergehenden Ansprüche 1 bis 7, **dadurch gekennzeichnet**, daß man die Blend-Zusammensetzung bei Temperaturen zwischen 240 °C und 270 °C in einem Extruder herstellt, austrägt und in üblicher Weise ggf. weiterverarbeitet, wobei jeweils das Polyketon (A) und das Polyamid und/oder Block-Copolyesteramid (B) separat in den Einzugsbereich des Extruders dosiert werden.

8. Verfahrenzur Herstellung der Polymer-Blend-Zusammensetzung gemäß irgendeinem der vorhergehenden Ansprüche 1 bis 7, **dadurch gekennzeichnet**, daß man Granulat der Komponenten (A), (B) und ggf. in einer üblichen Mischeinrichtung mischt und in einem Extruder bei 240 °C bis 270 °C zu einem Blend verarbeitet, austrägt und ggf. weiterverarbeitet.

9. Verwendung der Polymer-Blend-Zusammensetzung gemäß einem der vorhergehenden Ansprüche 1 bis 7 zur Herstellung von spritzgegossenen oder extrudierten Teilen, zur Herstellung von Fäden, Fasern oder Folien, bzw. zur Herstellung von Schmelzklebepulvern oder -fasern.
